# EUROPÄISCHE PATENTSCHRIFT

(11) **EP 3 638 913 B1**
(45) Veröffentlichungstag und Bekanntmachung des Hinweises auf die Patenterteilung: **14.07.2021**
(21) Anmeldenummer: 18729321.2
(22) Anmeldetag: 17.05.2018
(51) Int. Cl.: F16C 32/06, F16C 33/74, F16J 15/40, F16C 29/02

(54) **HYDROSTATISCHE GLEITLAGERANORDNUNG**
HYDROSTATIC SLIDE BEARING
PALIER HYDROSTATIQUE

(30) Priorität: 14.06.2017 DE 102017005663
(43) Veröffentlichungstag der Anmeldung: 22.04.2020
(73) Patentinhaber: Hochschule Niederrhein, 47805 Krefeld (DE)
(72) Erfinder: HOPPERMANN, Andreas, 41751 Viersen (DE)
(74) Vertreter: Cohausz Hannig Borkowski Wißgott
(86) Internationale Anmeldenummer: PCT/EP2018/000260
(87) Internationale Veröffentlichungsnummer: WO 2018/228715

(56) Entgegenhaltungen:
- EP-A1- 0 130 905
- DE-A1- 2 924 429
- DE-A1- 3 202 188
- DE-A1- 3 741 451
- GB-A- 2 180 015
- GB-A- 2 458 215
- JP-A- H11 108 059
- US-A- 5 575 567
- US-A1- 2001 021 284

## Beschreibung

Die Erfindung betrifft eine hydrostatische Gleitlageranordnung umfassend ein erstes, insbesondere unteres Lagerelement und ein zweites, insbesondere oberes Lagerelement, wobei in wenigstens einem der Lagerelemente, insbesondere im ersten Lagerelement wenigstens eine Ausnehmung angeordnet ist, die in Richtung zum anderen, bevorzugt gegenüberliegenden Lagerelement offen ist und welche wenigstens eine Lagertasche bildet, die mit einem druckbeaufschlagbaren / druckbeaufschlagten Fluid gefüllt ist.

Solche Anordnungen sind bekannt aus den folgenden Dokumenten: DE 37 41 451 A1, EP 0 130 905 A1, US 2001/021284 A1, JP H11 108059 A, DE 32 02 188 A1, DE 29 24 429 A1, GB 2 180 015 A.

Bei einer Druckbeaufschlagung werden die Gleitlagerflächen der Lagerelemente zumindest teilweise, bevorzugt vollständig von der auf die Lagerelemente wirkenden Kraft entlastet. Die Reibung zwischen den sich gegenüberliegenden Gleitlagerflächen kann so reduziert werden.

Eine Druckbeaufschlagung kann z.B. durch eine Pumpe erfolgen, welche das Fluid durch einen Kanal in dem die Ausnehmung aufweisenden Lagerelement in die Ausnehmung pumpt.

Solche hydrostatischen Gleitlageranordnungen sind im Stand der Technik bekannt und werden bevorzugt eingesetzt, um das Losbrechmoment zum Beispiel von gelagerten Maschinen zu reduzieren und so insbesondere die Antriebsleistung einer gelagerten Maschine reduzieren zu können.

Hier liegt der besondere Vorteil einer solchen hydrostatischen Gleitlageranordnung darin, dass, insbesondere im optimalen Fall, die sich gegenüberliegenden Lagerelemente durch Ausbildung eines Lagerspaltes bei hydrostatischer Druckbeaufschlagung des Fluids in der Lagertasche kontaktfrei bewegen können, so dass Reibungsverluste durch unmittelbaren Lagerelementkontakt in den gegenüberliegenden Flächen vermieden sind.

Trotz der Möglichkeit die Antriebsleistung gelagerter Maschinen auf diese Art und Weise reduzieren zu können ergibt sich häufig eine insgesamt betrachtet verschlechterte Energiebilanz gegenüber üblichen Lagern, besonders, wenn große Belastungen auf das Lager einwirken. Dies ergibt sich dadurch, dass ein signifikanter Energieanteil zur Ausbildung der hydrostatischen Kräfte in der Gleitlageranordnung aufgebracht werden müssen und sich durch den Lagerspalt zwischen den Lagerelementen ein Leckagevolumenstrom des Lagerfluids ergibt, der mit zunehmendem Lagerspalt ansteigt und eine hohe Pumpenleistung bedingt, um den Leckageverlust zu kompensieren.

Oftmals müssen Lagerspalte höher als theoretisch notwendig ausgebildet werden, zum Beispiel um Fertigungstoleranzen oder Verformungen durch Belastungen oder Wärmedehnungen ausgleichen zu können, sodass besonders in diesen Fällen solche hydrostatischen Gleitlageranordnungen in der Energieeffizienz problematisch sind.

Somit ist es eine Aufgabe der Erfindung eine hydrostatische Gleitlageranordnung der eingangs genannten Art bereitzustellen, mit welcher die Leckage von Fluid reduziert werden kann. Insbesondere soll hierdurch die Energiebilanz eines erfindungsgemäßen hydrostatischen Gleitlagers gegenüber den im Stand der Technik bislang bekannten Lageranordnungen verbessert sein.

Diese Aufgabe wird dadurch gelöst, dass die Lagertasche einen Trennkörper aufweist, der die Lagertasche über deren gesamten Querschnitt in zwei Bereiche teilt, wobei einer der Bereiche über wenigstens einen Kanal von einem druckheranführenden Fluid beaufschlagt ist und der zum gegenüberliegenden Lagerelement weisende Bereich mit dem druckbeaufschlagten Fluid gefüllt ist, welches das rheologische Verhalten eines Bingham-Körpers aufweist. Der Querschnitt wird hier senkrecht zur Verbindungsrichtung zwischen den Lagerelementen betrachtet.

Hier ist das druckbeaufschlagte Fluid das genannte Bingham'sche Fluid. Die Druckheranführung kann mit einem anderen Fluid, z.B. einem Newton'schen Fluid erfolgen.

Der Trennkörper kann z.B. ein in der Lagertasche beweglicher Kolben oder auch eine bewegliche Membran sein. Hierdurch erschließt sich der Vorteil, dass die Druckerzeugung nicht direkt mit dem Bingham'sehen Fluid vorgenommen werden muss, sondern in anderen Fluiden erfolgen kann und über den Trennkörper eine Druckweiterleitung auf das Bingham'sche Fluid erfolgt, insbesondere was ebenso die Druckverteilung vergleichmäßigt.

Die Erfindung kann weiterhin vorsehen, dass bei der eingangs genannten hydrostatischen Gleitlageranordnung die wenigstens eine Lagertasche von wenigstens einer ring- oder rahmenförmigen Dichtanordnung umgeben ist.

Eine solche Dichtanordnung kann z.B. in einer Ebene oder um eine Ebene herum liegen, welche parallel ist zur Lagerspaltebene, insbesondere wenn es sich um eine axiale Gleitlageranordnung handelt.

Eine solche Ausbildung hat den Vorteil, dass durch die zusätzliche Dichtanordnung, welche die wenigstens eine Lagertasche, insbesondere also alle von gegebenenfalls mehreren vorhandenen Lagertaschen umgibt, die Leckage des druckbeaufschlagten Fluids aus der jeweiligen Lagertasche heraus durch den Lagerspalt zur Umgebung hin verringert ist, insbesondere dadurch, dass die benannte wenigstens eine ring- oder rahmenförmige Dichtanordnung einen zusätzlichen Strömungswiderstand in den möglichen Strömungsweg des druckbeaufschlagten Fluids bereitstellt, z.B. durch eine zusätzliche Verringerung des Lagerspaltquerschnittes am Ort der Dichtanordnung.

Dadurch dass die ring- oder rahmenförmige Dichtanordnung die wenigstens eine Lagertasche umgibt und bevorzugt eine in sich geschlossene ring- oder rahmenförmige Anordnung ausbildet, wird im gesamten Umfangsbereich der wenigstens einen Lagertasche die gewünschte Leckagereduzierung ermöglicht.

Bei der vorliegenden Erfindung ist es irrelevant, ob die erfindungsgemäße hydrostatische Gleitlageranordnung ein Axiallager- oder eine Radiallageranordnung ausbildet. Es kann hierbei auch vorgesehen sein, dass eines der Lagerelemente, insbesondere das vorgenannte zweite, bevorzugt obere Lagerelement direkt durch eine zu lagernde Vorrichtung ausgebildet ist. Erstes und zweites Lagerelement können nicht nur übereinander angeordnet sein, sondern z.B. auch ineinander.

Die sich gegenüberliegenden Gleitlagerflächen der beiden gegenüberliegenden Lagerelemente, die über den benannten Lagerspalt voneinander separiert sind, können in einer Ausführung beispielsweise plan ausgebildet sein, beispielsweise, wenn die Gleitlagervorrichtung ein Axiallager bildet. Bei anderen Anordnungen besteht auch die Möglichkeit, dass die sich gegenüberliegenden Lagerflächen der Lagerelemente zylindrisch ausgebildet sind, zum Beispiel bei Radiallagern. Ebenso denkbar ist eine Ausbildung als kegelige oder teilsphärische Flächen. Bevorzugt ist es vorgesehen, dass der benannte Lagerspalt überall im Bereich der sich gegenüberliegenden Lagerflächen der beiden Lagerelemente gleich ist. Dies ist jedoch nicht zwingend nötig, insbesondere wenn nur eine Teilentlastung der Gleitlagerflächen von der gelagerten Kraft vorliegt.

In einer ersten möglichen Ausführungsform kann es die Erfindung vorsehen, dass die ring- oder rahmenförmige Dichtanordnung ausgebildet ist als ein Dichtelement, welches an der äußeren Umfangsperipherie der Gleitlageranordnung den zwischen den Lagerelementen ausgebildeten Lagerspalt überdeckt, insbesondere den Lagerspalt in Umfangsrichtung umgibt, insbesondere zumindest teilweise die jeweilige Umfangsfläche beider Lagerelemente in der Umfangsrichtung umgibt.

Das benannte Dichtungselement kann beispielsweise als ein elastisches, insbesondere elastomeres Dichtungselement ausgebildet sein und ermöglicht es, den Austritt des druckbeaufschlagten Fluids durch den Lagerspalt nach außen zur Umgebung hin zu unterbinden oder zumindest zu reduzieren.

Ein solches Dichtelement kann in einer möglichen Ausführungsform, insbesondere bei einem Axiallager, an der Umfangsfläche des unteren Lagerelementes gedichtet befestigt sein. Hierdurch sind das Lagerelement und das Dichtelement drehfest verbunden. An der Umfangsfläche des oberen Lagerelementes kann das Dichtelement lose anliegend sein, so dass das obere Lagerelement in der Abstandsrichtung beider Lagerelemente innerhalb des umgebenen Dichtelementes verschieblich ist und insbesondere innerhalb des Dichtelementes relativ zum anderen Lagerelement rotierbar ist. Es besteht so die Möglichkeit, dass der Lagerspalt zwischen den Lagerelementen belastungs- bzw. druckabhängig unterschiedlich sein kann, ohne dass hierdurch die Dichtung beeinträchtigt wird.

Die Erfindung kann ebenso vorsehen, dass das Dichtelement an der Umfangsfläche des einen, bevorzugt unteren Lagerelements gedichtet befestigt ist, so wie zuvor beschrieben und an der Umfangsfläche des anderen, bevorzugt oberen Lagerelements formschlüssig anliegend ist und in der Abstandsrichtung beider Lagerelemente längenvariabel ausgebildet ist. So kann durch die Längenvariabilität des Dichtelementes eine Spalthöhenänderung beim Lagerspalt kompensiert werden. Durch den Formschluß wird weiterhin eine Rotierbarkeit des Lagerelementes im Dichtelement gewährleistet. Beispielsweise kann das Dichtelement dabei in der Abstandsrichtung bzw. Spalthöhenrichtung teleskopierbar oder als Faltenbalg ausgebildet sein.

Statt der vorgenannten Ausbildung einer Dichtanordnung außen an der Gleitlageranordnung, aber auch in Kombination mit einer solchen Ausführung kann es die Erfindung in einer weiteren Ausführung vorsehen, dass die ring- oder rahmenförmige Dichtanordnung ausgebildet ist als wenigstens eine Nut in einem der Lagerelemente, insbesondere im unteren Lagerelement, wobei die wenigstens eine Nut die wenigstens eine Lagertasche umgibt, insbesondere vollständig umgibt, das heißt also die Nut in sich geschlossen ist und in der wenigstens einen Nut insbesondere in jeder jeweiligen von gegebenenfalls mehreren vorgesehenen Nuten ein Dichtmittel angeordnet ist.

Ein solches Dichtmittel kann den Lagerspalt am Ort des Dichtmittels zumindest verringern, ggfs. schließen, insbesondere wenn das Dichtmittel den Lagerspalt überbrückend das gegenüberliegende Lagerelement kontaktiert. Ggfs. kann dieser Kontaktierungszustand nicht zu jeder Zeit vorliegen, z.B. nicht mehr, wenn das eine Lagerelement gegenüber dem anderen angehoben wird und sich der Lagerspalt vergrößert.

Eine solche Nut ist zum Lagerspalt hin offen, insbesondere liegt die Öffnungsebene der jeweiligen Nut in derselben Ebene wie die Öffnungsebene der Ausnehmung, welche die Lagertasche bildet, insbesondere also in der Ebene der Gleitlagerfläche

So wird bei dieser Ausführungsform bereits innerhalb des Lagers, das heißt inkludiert in einen Bereich zwischen den beiden Lagerelementen eine Dichtung realisiert, welche den Leckagestrom des druckbeaufschlagten Fluids zumindest reduziert, bevorzugt sogar unterbindet.

Die Erfindung kann hier in einer möglichen Ausführungsform vorsehen, dass das Dichtmittel als ein elastisches, insbesondere elastomeres Dichtelement, z.B. als Dichtring ausgebildet ist.

Ein solches Dichtelement kann betrachtet in der Abstandsrichtung zwischen den Lagerelementen eine größere Höhe aufweisen, als die Spalthöhe zwischen den beiden Lagerelementen, sodass das Dichtelement in der Höhenrichtung betrachtet mit einem ersten Bereich, insbesondere einem unterem Bereich in der Nut einliegt und mit einem zweiten, insbesondere oberen Bereich über die Nutoberkante, das heißt somit auch über die Gleitlagerfläche des Lagerelementes übersteht, bevorzugt dabei die Spalthöhe zumindest teilweise überbrückt und weiter bevorzugt kontaktierend an der gegenüberliegenden Lagerfläche des gegenüberliegenden Lagerelementes anliegt.

So wird der Lagerspalt nach außen hin, also zur Niederdruckseite durch das benannte elastische, z.B. elastomere Dichtelement abgedichtet oder zumindest der Lagerspalt reduziert, sofern die beiden Lagerelemente durch den hydrostatisch wirkenden Druck so weit unter Erhöhung des Lagerspaltes auseinander gedrückt werden, dass sich zwischen der zum Lagerelement weisenden Dichtfläche des Dichtelementes ein verbleibender Dichtspalt ergibt, der aber zumindest kleiner ist als der benannte Lagerspalt zwischen den Lagerelementen, sodass dies zumindest zu einer Leckagereduzierung führt.

Ein solches elastisches, z.B. elastomeres Dichtelement als Dichtmittel, kann in Richtung des negativen Druckgradienten das heißt auf der von der Lagertasche abgewandten Seite und somit niederdruckseitig, insbesondere radial außenseitig von einem in der Nut ebenso liegenden Stützring umgeben sein. Ein solcher Stützring kann verhindern, dass das elastische Dichtelement in Richtung zur Niederdruckseite in den Dichtspalt hineingepresst wird.

Das Dichtelement kann auch als Dichtkantenring oder Gleitringdichtung oder textile Dichtung ausgebildet sein, die in der genannten Nut einliegt. Hierbei kann eine Gleitringdichtung die in einer Nut eines der Lagerelemente einliegt, in Richtung zum gegenüberliegenden Lagerelement, insbesondere von der diesem Lagerelement abgewandten Seite kraftbeaufschlagt sein, z.B. mittels eines Federelementes.

Besonders in einer der vorgenannten Ausführungen, aber auch bei den nachbenannten Ausführungen kann es die Erfindung vorsehen, dass die Ringanordnung des Dichtelementes, insbesondere Dichtringes nicht konzentrisch ist zur Lagertasche, die von diesem Dichtmittel umgeben ist. Auch können die Querschnittsform der Lagertasche und des Dichtmittels bzw. der Nut formverschieden sein, insbesondere im mathematischen Sinne nicht-ähnlich sein.

Hierdurch kann z.B. eine Strömung des druckbeaufschlagten Fluids im Bereich des Dichtmittel / Dichtringes begünstigt werden, die eine Schmierung und/oder Kühlung an dieser Stelle unterstützt.

Statt einer Ausbildung des Dichtmittels als elastischer, insbesondere elastomerer Festkörper kann die Erfindung in einer Alternative auch vorsehen, dass das Dichtmittel, welches innerhalb einer solchen vorbeschriebenen Nut angeordnet ist als ein Fluid, insbesondere ein flüssiges Fluid ausgebildet ist, welches eine höhere Viskosität aufweist, bevorzugt eine mindestens dreifach, weiter bevorzugt mindestens fünffach höhere Viskosität aufweist, als das Fluid, insbesondere ebenso flüssige Fluid in der wenigstens einen Lagertasche. Für ein solches flüssiges Fluid in der wenigstens einen Lagertasche kann in üblicher Weise ein Hydrauliköl Verwendung finden.

So wird durch die höhere Viskosität dieses eingesetzten Fluids in der benannten Nut ebenso eine Dichtung des Lagerspaltes gegenüber der im Wesentlichen drucklosen Umgebung erzielt, da dieses Fluid mit der höheren Viskosität im Vergleich zu dem Fluid in der Lagertasche einen höheren Fließwiderstand im Lagerspalt erfährt. Das aus der Lagertasche durch den Lagerspalt austretende druckbeaufschlagte Fluid drückt somit das in der Viskosität höhere Fluid innerhalb des Lagerspaltes vor sich her und erfährt somit ebenso den vom Dichtmittel-Fluid erhöhten Fließwiderstand.

Diese Ausführungsform wird insbesondere dadurch vorteilhaft weitergebildet, dass das Fluid in einer Nut, welches als Dichtmittel Verwendung findet, als Nicht-Newtonsches, bevorzugt Bingham'sches Fluid ausgebildet ist und somit in bevorzugter Weise erst oberhalb einer Fließgrenze zu Fließen beginnt und weiter bevorzugt mit zunehmender Scherrate seine Viskosität erhöht und hierdurch die Dichteigenschaften verbessert.

Bei mehreren Lagertaschen im Lagerelement können alle Lagertaschen gemeinsam von wenigstens einer Nut umgeben sein oder jede von mehreren Lagertaschen hat wenigstens eine eigene diese umgebende Nut mit der Ausbildung als Dichtanordnung.

Die Erfindung kann vorsehen, dass mehrere Nuten um die wenigstens eine Lagertasche herum angeordnet sind.

Solche Nuten können zum Beispiel konzentrisch zueinander ausgebildet sein. Bei solchen mehreren vorgesehenen Nuten kann die Erfindung in einer Weiterbildung vorsehen, dass in unterschiedlichen Nuten verschiedene Dichtmittel angeordnet sind.

So ergibt sich hierdurch eine mögliche Ausführung, bei der eine Nut, die mit einem Fluid als Dichtmittel gefüllt ist, von wenigstens einer weiteren Nut umgeben ist, in der ein elastisches, insbesondere elastomeres Dichtelement als Dichtmittel angeordnet ist. So bietet das in einer weiter außenliegenden Nut (näher zur Niederdruckseite) angeordnete elastische, z.B. elastomere Dichtelement eine effektive weitere Abdichtung gegen den Austritt des in der Dichtung vorgelagerten Fluids mit der bevorzugt höheren Viskosität.

Es besteht auch die Möglichkeit bei vorgesehenen mehreren Nuten die jeweils mit einem Fluid als Dichtmittel ausgestattet sind, dass die Viskosität der Fluide von der Hochdruckseite, bevorzugt also von innen zur Niederdruckseite, insbesondere nach außen und insbesondere von radial innen nach radial außen zunimmt. So wird hierdurch sukzessive von Nut zu Nut der Fließwiderstand durch die Fluide mit steigender Viskosität erhöht.

Bei sämtlichen vorgenannten Ausführungsformen, bei denen wenigstens eine Lagertasche durch eine Dichtanordnung umgeben ist, das heißt sowohl bei den eingangs beschriebenen Dichtanordnungen, außenseitig an der Gleitlageranordnung und auch bei wenigstens einer Dichtanordnung innerhalb der Gleitlageranordnung durch die wenigstens eine zuvor beschriebene Nut und das darin angeordnete Dichtmittel kann die Erfindung vorsehen, dass auf der Hochdruckseite vor einer solchen Dichtanordnung, insbesondere also radial innenseitig vor einer solchen Dichtanordnung wenigstens ein Druckentlastungskanal angeordnet ist, der die wenigstens eine Lagertasche über den Lagerspalt hinweg mit einer Drucksenke verbindet.

Ein solcher Druckentlastungskanal kann das Lagerelement durchdringen und beispielsweise auch in eine Ringnut führen, die druckseitig insbesondere innenseitig vor einer erfindungsgemäßen Dichtanordnung angeordnet ist, die ihrerseits eine Nut mit dem darin angeordneten Dichtmittel umfasst.

So wird unmittelbar vor der erfindungsgemäßen Dichtanordnung eine Druckreduzierung realisiert, sodass hierdurch die erfindungsgemäße Dichtanordnung mit einer deutlich reduzierten Kraft beaufschlagt ist.

Die Erfindung kann hier vorsehen, dass das Fluid der wenigstens einen Lagertasche zwischen einer Druckquelle (z.B. Pumpe), der wenigstens einen Lagertasche, dem Lagerspalt, dem wenigstens einen Druckentlastungskanal und der benannten Drucksenke im Kreislauf gefördert wird. Die Druckquelle kann dabei das zu fördernde Fluid aus der Drucksenke beziehen. Hierdurch wird ein Verlust von Lagertaschen-Fluid zur Umgebung hin verhindert, oder aber zumindest signifikant reduziert.

Ein Fluid welches in einer der vorbeschriebenen Möglichkeiten der Dichtanordnungen eingesetzt wird, kann bevorzugt eine Nicht-Newtonsche Flüssigkeit sein und mit zunehmender Scherrate die Viskosität erhöhen. So ergibt sich eine verbesserte Abdichtung, insbesondere bei einwirkenden Scherkräften, zum Beispiel, wenn diese durch das Lagertaschen-Fluid erzeugt sind oder durch eine in das Lager eingeleitete Bewegung zum Beispiel einer damit gelagerten Maschine.

Eine solche Flüssigkeit kann weiterhin eine Bingham'sche Flüssigkeit ausbilden und somit unterhalb einer vorgegebenen Fließgrenze im Wesentlichen die Eigenschaft eines elastischen Festkörpers aufweisen und oberhalb der Fließgrenze erst zu fließen beginnen, insbesondere mit der weiteren Eigenschaft mit zunehmender Scherrate die Viskosität zu erhöhen.

Es besteht auch die Möglichkeit als eine Flüssigkeit in der vorbenannten Dichtanordnung eine solche zu wählen, die ein rheologisches Verhalten aufweist, insbesondere also eine Viskosität aufweist, das/die in Abhängigkeit einer von außen auf das Fluid wirkenden Größe, wie zum Beispiel einer Magnetfeldstärke änderbar ist.

In weiterhin besonders bevorzugter Ausführung kann es bei allen vorgenannten Ausführungen, die ein Fluid in einer Dichtanordnung einsetzen vorgesehen sein, dass dieses Fluid in der Dichtanordnung mit dem Fluid der wenigstens einen Lagertasche nicht mischbar ist.

Sofern somit zum Beispiel bei dem vorbeschriebenen Kreislauf oder auch durch andere Umstände beide Fluide aus der Dichtanordnung und der Gleitlageranordnung herausgetragen werden, besteht die Möglichkeit, dass die beiden Fluide voneinander getrennt werden und in getrennter Form wiederum ihrem jeweiligen Einsatz zugeführt werden, zum Beispiel also das Lagertaschenfluid im Kreislauf in die Lagertasche zurückgepumpt wird, wobei ebenso die Möglichkeit besteht, dass aus der Gleitlageranordnung ausgetretenes Dichtfluid in die als Erfindung beschriebene Nut der Dichtanordnung zurückgeführt wird, wofür auch eine jeweilige Dichtanordnung mit Dichtfluid in einem entsprechenden, bevorzugt eigenen Kreislauf dieses Dichtungsfluides angeordnet sein kann.

Ein in der erfindungsgemäßen Gleitlageranordnung verwendetes Fluid ist erst oberhalb einer Fließgrenze fließfähig und weist darunter das Verhalten eines im Wesentlichen elastischen Körpers auf und kann somit eingesetzt werden, um bei hydrostatischer Druckbeaufschlagung unterhalb der Fließgrenze die beiden Lagerelemente voneinander unter Bildung eines Lagerspaltes abzuheben ohne signifikant in den Lagerspalt einzudringen und somit zumindest das Losbrechmoment einer so gelagerten Maschine zu reduzieren.

Das Lagertaschenfluid kann in weiterhin bevorzugter Ausführungsform eine Viskosität aufweisen, die mit zunehmender Scherrate zunimmt. Weiter bevorzugt nimmt dessen Viskosität bevorzugt linear proportional mit zunehmender Scherrate zu, was sich als vorteilhaft erweist für die Druck-Regelbarkeit einer erfindungsgemäßen Gleitlageranordnung.

Insbesondere kann hier die Leckage durch die Ausführung mit einem dilatanten Fluid reduziert werden, wenn sich eine zusätzliche Schleppströmung durch eine aufgeprägte Relativbewegung der Lagerelemente im Lager ergibt und dies zu einer weiteren Scherung des Lagertaschenfluids führt.

Bevorzugt wird hier weiterhin ein solches Fluid eingesetzt, welches keine zeitliche Degradation hinsichtlich seiner Viskositätseigenschaften aufweist.

Als Fluide, können im Rahmen der Erfindung bevorzugt die folgenden Flüssigkeiten eingesetzt werden:
Für Newtonsche Fluide solche ab der ISO VG Reihe 100, für Nicht-Newtonsche, insbesondere Bingham'sche Fluide Metallseifen- oder Komplexseifenfette der NLGI-Klassen 000 bis 3, magneto-rheologische smart fluids oder Gelfett auf Siliziumbasis.

Die Lagertasche kann vorteilhafterweise in mehrere Lagertaschenkammern unterteilt sein. Die einzelnen Lagertaschenkammern der Lagertasche stehen untereinander fluidisch in Verbindung, wofür Verbindungskanäle zwischen den Kammern vorgesehen sein können. Ein solcher Kanal kann als Nut in der Oberfläche einer Wandung zwischen zwei Kammern ausgebildet sein, die zum gegenüberliegenden Lagerelement weist. Die Oberflächen der Wandungen zwischen Kammern, die jeweils zum gegenüberliegenden Lagerelement weisen, haben bevorzugt dieselbe Höhenlage, wie die Gleitfläche des Lagerelementes, die um die gesamte Lagertasche herum angeordnet ist.

Die Erfindung kann weiterhin vorsehen, dass eine Lagertasche nicht nur mittels eines Kanales mit einem Druckfluid beaufschlagt ist, sondern dass, bevorzugt gleichmäßig über den Querschnitt der Lagertasche verteilt, mehrere Kanäle in die Lagertasche münden, durch welche das Fluid druckbeaufschlagt ist. Hierdurch wird besonders in Verbindung mit einem Bingham'schen Fluid die Druckbeaufschlagung vergleichmäßigt.

Bei allen Ausführungen und besonders der vorgenannten kann der von einer Pumpe erzeugte Druck mittels eines Druckübersetzers erhöht und mit dem erhöhten Druck die Lagertasche beaufschlagt sein.

Ebenso kann zur Aufrechterhaltung des Druckes in der Lagertasche ein Absperr- oder Rückschlagventil in dem Kanal zur Druckzuführung in die Lagertasche vorgesehen sein oder der Kanal kann mit einem Druckspeicher verbunden sein.

Bei allen erfindungsgemäßen Ausführungen können entweder die benannten Lagerelemente relativ zueinander rotieren, bevorzugt zumindest eines relativ zum anderen, insbesondere um eine Achse, die senkrecht zur Gleitlagerfläche, bzw. der Verbindungsrichtung zwischen den Lagerelementen liegt oder um eine Achse, die parallel zur Gleitlagerfläche liegt, insbesondere wenn die Gleitlagerflächen der Lager einer Krümmung um diese Achse aufweisen oder das eine Lagerelement kann gegenüber dem anderen verkippt oder in Abstandsrichtung gehoben werden.

Mögliche Ausführungsformen der Erfindung werden anhand der nachfolgenden Zeichnungen beschrieben.

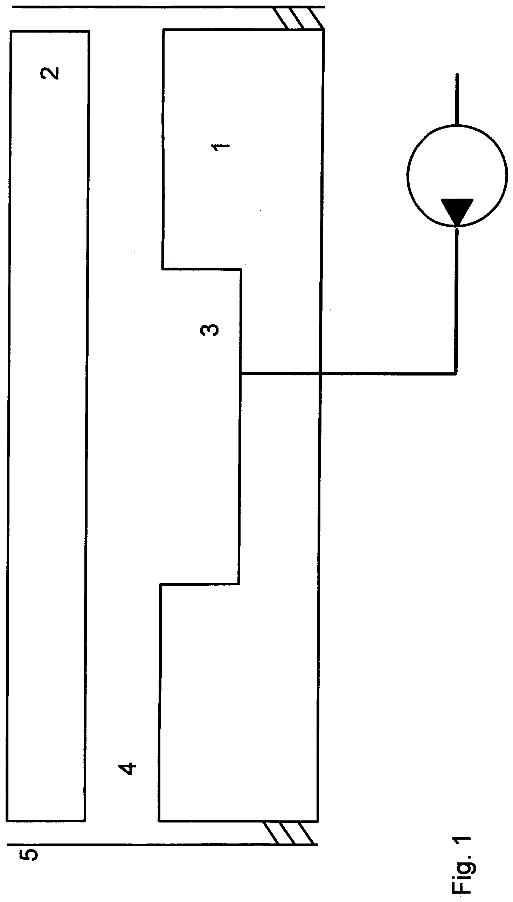

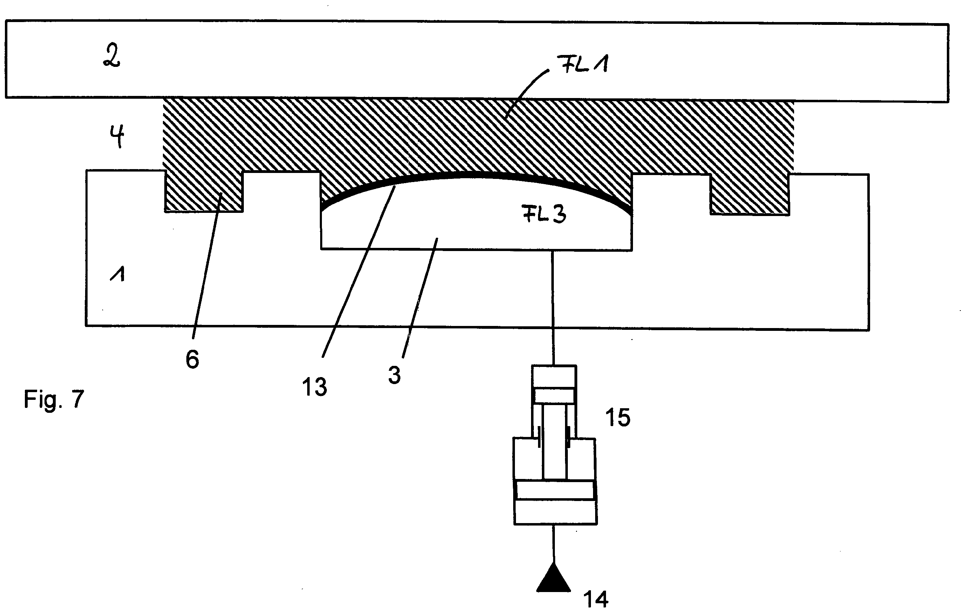

Die Figuren 1 bis 6 zeigen nicht-erfindungsgemäße Ausführungen. Figur 7 zeigt eine Ausführung gemäß der Erfindung.

Die Figur 1 zeigt eine Ausführungsform, bei der eine Gleitlageranordnung gebildet ist durch ein unteres Lagerelement 1 und ein oberes Lagerelement 2. Im unteren Lagerelement ist eine Ausnehmung 3 angeordnet, die eine Lagertasche 3 bildet, welche in Richtung zum gegenüberliegenden Lagerelement 2 offen ist. Eine solche Lagertasche 3 ist von einem bevorzugt flüssigen Fluid gefüllt, welches durch eine externe Druckversorgung, hier als Pumpe symbolisiert mit hydrostatischem Druck beaufschlagt sein kann. Hierfür ist eine entsprechende Fluid-Zuführung von der Druckversorgung in die Ausnehmung 3 gelegt. Diese Ausführung der Druckversorgung kann auch für alle anderen nachfolgend gezeigten Ausführungen gelten, auch wenn es dort nicht gezeigt ist.

Zwischen den beiden Lagerelementen 1,2 ergibt sich ein Lagerspalt 4, der im Wesentlichen vom Fluid der Lagertasche 3 befüllt ist.

Durch die hydrostatische Druckbeaufschlagung werden die beiden Lagerelemente 1 und 2 voneinander getrennt, sodass sich kein Festkörperkontakt zwischen den entsprechend gegenüberliegenden Flächen der beiden Lagerelemente 1,2 ergibt. Bei der vorliegenden Ausbildung des hier dargestellten Lagers kann somit das Lagerelement 2 auf dem Flüssigkeitsfilm im Lagerspalt 4 gegenüber dem Lagerelement 1 sehr reibungsarm drehen.

Gemäß dem eingangs beschriebenen ersten Lösungsbeispiel sieht die Erfindung hier vor, dass außen an der Gleitlageranordnung der Lagerspalt 4 in Umfangsrichtung vollständig von einem Dichtelement 5 überdeckt, insbesondere umgeben ist, welches zum Beispiel als elastomere Dichtung ausgebildet sein kann. In dem Beispiel der Figur 1 ist dieses elastomere Dichtelement 5 an dem unteren Lagerelement 1 gedichtet und drehfest befestigt, zum Beispiel stoffschlüssig oder kraftschlüssig.

Am oberen Lagerelement 2 hingegen liegt das Dichtelement lose, bevorzugt lose kontaktierend an, sodass das Lagerelement 2 in Richtung der Lagerspalthöhe innerhalb des Dichtelementes 5 bewegbar ist und somit unterschiedliche Lagerspalte 4 zum Beispiel durch verschiedene hydrostatische Drücke oder auch unterschiedliche Kraftbelastungen auf das Lagerelement 2 realisiert werden können, ohne dass sich die Dichteigenschaft zwischen dem Dichtelement 5 und dem oberen Lagerelement 2 ändert.

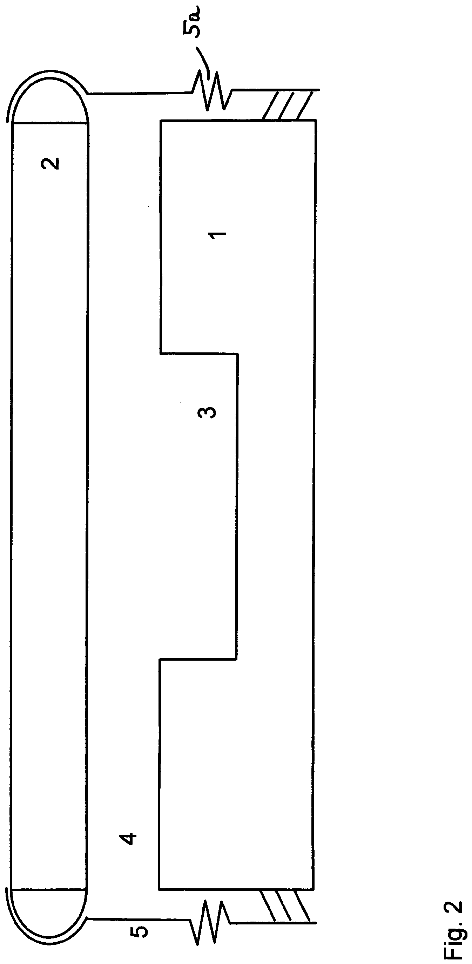

Gemäß der Ausführung der Figur 2 kann eine Alternative vorsehen, dass das beschriebene Dichtelement 5 am unteren Lagerelement 1 gedichtet drehfest befestigt ist, zum Beispiel wiederum kraft- oder stoffschlüssig, am oberen Lagerelement 2 hingegen formschlüssig befestigt ist, sodass sich das Lagerelement 2 innerhalb der Dichtung drehen kann, die Dichtung jedoch in axialer Richtung am oberen Lagerelement 2 befestigt ist.

Um hier einen Lagerspaltausgleich für verschiedene Lagerspalthöhen bereitzustellen, kann es die Erfindung vorsehen, dass das Dichtelement 5 in Abstandsrichtung und somit Lagerspaltrichtung längenvariabel ist, zum Beispiel hier durch die schematisch dargestellte Faltenbalganordnung 5a. So kann sich die Gesamtlänge des Dichtungselementes 5 in axialer Richtung ändern, sofern sich die Lagerspalthöhe ändern sollte.

Es ergibt sich bei diesen Ausführungsformen eine jeweils äußere Abdichtung, die geeignet ist, die Leckage des Fluids in der Lagertasche 3 nach außen zur Umgebung hin zu reduzieren oder gar zu unterbinden.

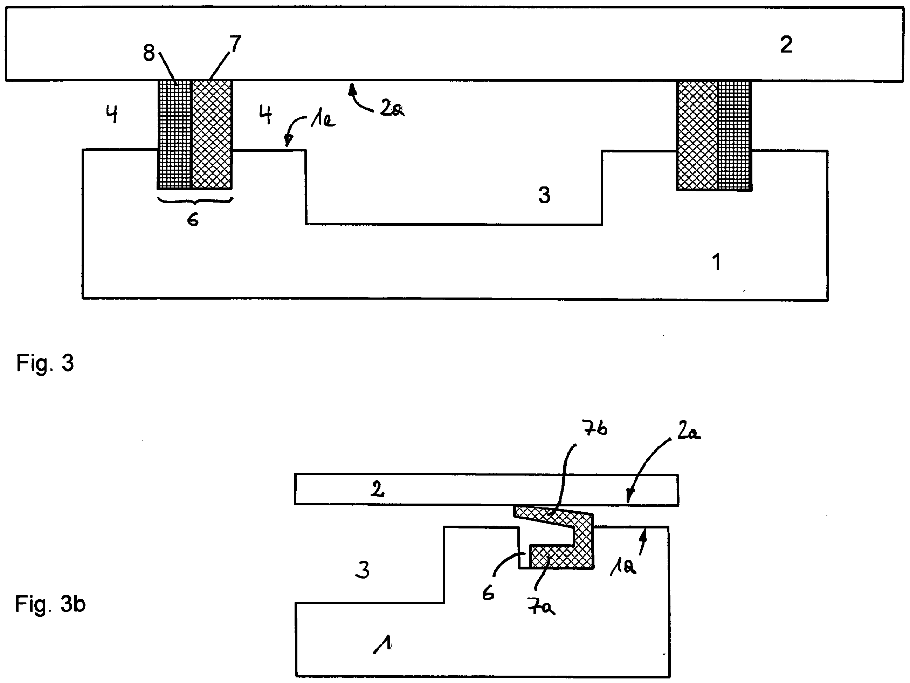

Gemäß der Figur 3 ist es in einer anderen Ausführungsform vorgesehen, dass um die Lagertasche 3 herum eine Nut 6 angeordnet ist, welche die Lagertasche vollständig umgibt, die Nut 6 somit in sich geschlossen ist. Innerhalb der Nut 6 ist hier ein rahmen- oder bevorzugt ringförmiges Dichtelement 7 angeordnet, insbesondere ein elastisches, z.B. elastomeres Dichtelement, das auf der Niederdruckseite, hier insbesondere radial außenseitig mit einem Stützelement 8 gegen ein Fließen in den Lagerspalt 4 abgestützt ist.

Das elastische, z.B. elastomere Dichtelement 7 weist eine Höhe auf, die größer ist als die Tiefe der Nut 6, sodass das Dichtelement 7 mit einem oberen Bereich über die Gleitlagerfläche 1a des unteren Lagerelementes 1 übersteht und bevorzugt den Lagerspalt 4 zumindest teilweise überbrückt und weiter bevorzugt kontaktierend an der Gleitlagerfläche 2a des oberen Lagerelementes 2 anliegt.

So wird der Lagerspalt 4 hier zur Niederdruckseite, insbesondere also nach radial außenliegend abgedichtet oder der Lagerspalt 4 zumindest im Bereich zwischen dem Dichtelement 7 und dem oberen Lagerelement 2 signifikant reduziert.

Das Dichtelement kann gemäß Figur 3b eine solche Ausführung aufweisen, gemäß der mit erhöhter Druckbeaufschlagung zwei zueinander bewegliche Elemente 7a, 7b des Dichtelementes 7 zunehmend separiert werden, um so eine Kraftbeaufschlagung des Dichtelementes 7 in Richtung zum Lagerelement 2 zu erzielen, die von der wirkenden Kraft abhängig ist, die durch das hydrostatisch beaufschlagte Fluid in der Lagertasche 3 auf das Dichtelement 7 ausgeübt wird. So wird mit zunehmendem Druck in der Lagertasche 3 auch die Dichtfunktion des Dichtelementes 7 vergrößert.

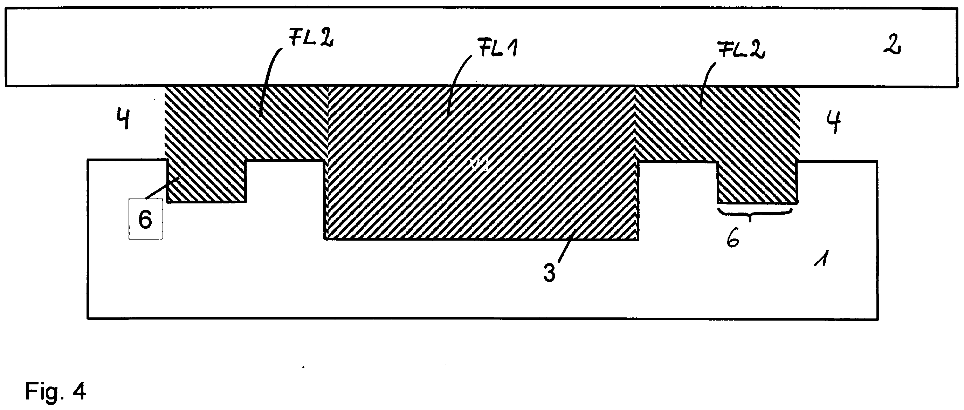

Die Figur 4 zeigt eine Ausführungsform, bei der um die Lagertasche 3 herum eine Nut 6 angeordnet ist, die im vorliegenden Fall mit einem Fluid FL2 insbesondere einem flüssigen Fluid gefüllt ist, welches eine höhere Viskosität aufweist, als das Fluid FL1 insbesondere bevorzugt flüssige Fluid in der Lagertasche 3. So wird auch hierdurch eine Dichtanordnung geschaffen, die im vorliegenden Fall durch die Nut und die darin vorgesehene Flüssigkeit FL2 ausgebildet ist, welche die Leckage des Lagertaschenfluids FL1 nach außen zur Umgebung hin reduziert oder unterbindet, da aufgrund der höheren Viskosität des Fluids FL2 in der Nut 6 der Fließwiderstand im Lagerspalt 4 für dieses Fluid reduziert wird und das Fluid FL2 in der Dichtungsnut 6 bei der Druckbeaufschlagung in Richtung hier radial nach außen vor dem Lagertaschenfluid FL1 hergetrieben wird und somit dessen Fließverhalten beschränkt.

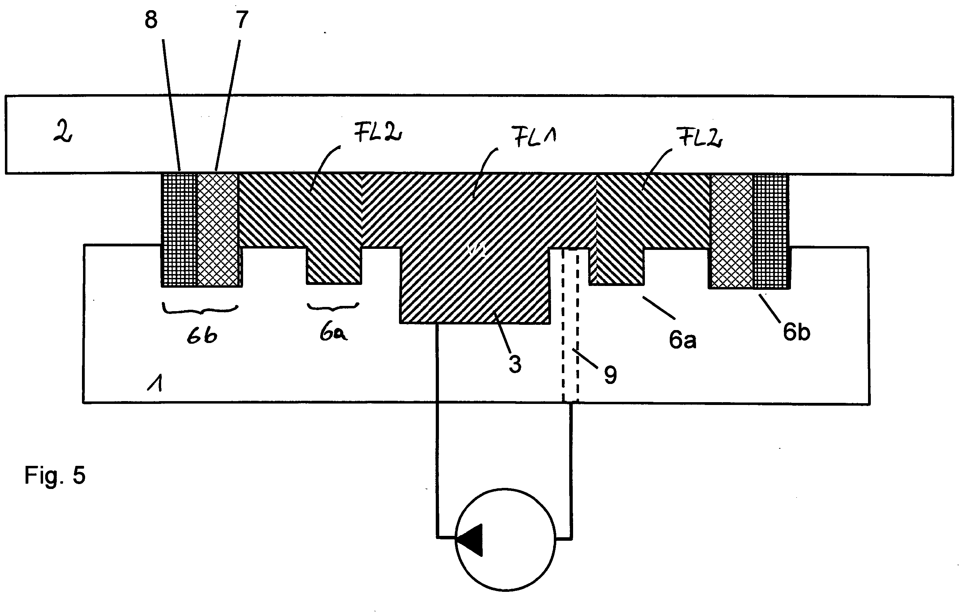

Die Figur 5 zeigt in einer Weiterbildung die Kombination der beiden in Figur 3 und 4 beschriebenen möglichen Dichtungskonzepte, wobei hier in diesem Beispiel um die Lagertasche 3 herum zwei zueinander konzentrische Nute 6a und 6b angeordnet sind, wobei die innere Nut 6a mit einem flüssigen Fluid FL2 gefüllt ist, welches eine höhere Viskosität aufweist, als das Fluid FL1 in der Lagertasche 3 und wobei weiterhin in der Nut 6b die radial weiter außenliegend ist, ein elastisches, bevorzugt elastomeres Dichtelement 7 hier inklusive Stützring 8 angeordnet ist.

Die Figur 5 visualisiert weiterhin durch den gestrichelten Kanal 9, dass auf der Hochdruckseite der flüssigkeitsgefüllten Nut 6a eine Druckentlastung vorgesehen sein kann dadurch, dass der gezeigte Kanal 9 zu einer Drucksenke führt, wodurch die auf die höher viskose Flüssigkeit FL2 im Kanal 6a wirkende Kraft verringert wird.

Gleichzeitig ermöglicht dieser Kanal 9 die Realisierung eines Kreislaufes, in welchem das Lagertaschenfluid FL1 von einer Pumpe in die Lagertasche 3 gepumpt wird, über den Lagerspalt 4 zum Kanal 9 gelangt, durch diesen hindurch zur Drucksenke fließt und von dort wiederum über die Pumpe in den Kreislauf zurückgeführt wird.

So wird auf dieser Art und Weise, das Lagertaschenfluid im Kreislauf gepumpt und ein Verlust dieses Fluids FL1 zur außenliegenden Umgebung verhindert oder zumindest signifikant reduziert.

Diese Ausbildung einer Kreislaufströmung mit dem dargestellten Kanal 9 ist ebenso in die Ausführungsformen der Figuren 3 und 4 integrierbar, wobei hier ebenso der Kanal 9 auf der Hochdruckseite der jeweils realisierten Dichtungsanordnung das heißt hier der Nut 6 entweder mit dem darin angeordneten elastischen Dichtelement 7 oder mit dem darin angeordneten Dichtfluid FL 2 liegt.

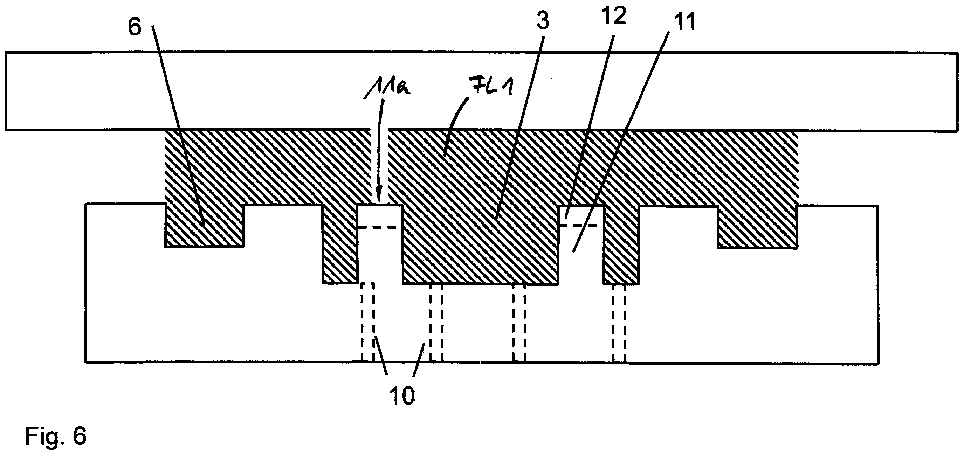

In Figur 6 wird eine Anordnung gezeigt, bei der ein Fluid FL1 mit den rheologischen Eigenschaften eines Bingham-Fluids in der Lagertasche 3 und in der umgebenden Nut 6 verwendet wird. Zur Erzielung eines gleichmäßigen hydrostatischen Druckzustandes in der Lagertasche 3 werden mehrere Kanäle 10 von einer hier nicht gezeigten Druckquelle (Pumpe) in die Lagertasche 3 geführt.

Gleichzeitig sind in dieser Ausführungsform zusätzliche Rastflächen 11a in die Lagertasche 3 eingebracht worden, um Lagerkräfte aufnehmen zu können. Die Rastflächen 11a werden gebildet durch die zum gegenüberliegenden Lagerelement weisenden Oberflächen der Wandungen 11, durch welche die Lagertasche in mehrere Lagertaschenkammern unterteilt ist. Hier sind die Wandungen 11 durch in den Oberflächen liegende Nuten 12 unterbrochen, so dass einzelne untereinander verbundene Kammern in der Lagertasche 3 entstehen. Insbesondere weist hier jede Lagertaschenkammer einen eigenen Kanal zur Druckfluidzuführung auf.

Um eine Vermischung des druckheranführenden Fluides FL3 und des im Lager befindlichen Bingham-Fluides FL1 zu vermeiden, ist in Figur 7 ein als Membran ausgebildeter Trennkörper 13 in die Lagertasche 3 eingebunden worden, so dass das unterhalb der Trennmembran 13 vorhandene Druckmedium FL3 nicht mit dem Fluid FL1 oberhalb der Trennmembran 13 in Verbindung treten kann. Die Trennmembran 13 überspannt den gesamten Querschnitt der Lagertasche 3 und trennt diese somit in einen ersten oberen und zweiten unteren Bereich auf.

Der Druck im heranführenden Fluid FL3 wird aus einer Druckquelle 14 in einen Druckübersetzer 15 überführt, so dass im druckheranführenden Fluid FL3 in der Lagertasche 3 ein höherer Druck vorliegt als in der Druckquelle 14.

## Patentansprüche

1. Hydrostatische Gleitlageranordnung umfassend ein erstes Lagerelement (1) und ein zweites Lagerelement (2), wobei in wenigstens einem der Lagerelemente (1) wenigstens eine Ausnehmung (3) angeordnet ist, die in Richtung zum anderen Lagerelement (2) offen ist und welche wenigstens eine Lagertasche (3) bildet, die mit einem druckbeaufschlagbaren / druckbeaufschlagten Fluid (FL1) gefüllt ist, **dadurch gekennzeichnet, dass** die Lagertasche (3) einen Trennkörper (13) aufweist, der die Lagertasche (3) über deren gesamten Querschnitt in zwei Bereiche teilt, wobei einer der Bereiche über wenigstens einen Kanal von einem druckheranführenden Fluid (FL3) beaufschlagt ist und der zum gegenüberliegenden Lagerelement (2) weisende Bereich mit dem druckbeaufschlagten Fluid (FL1) gefüllt ist, welches das rheologische Verhalten eines Bingham-Körpers aufweist.

2. Gleitlageranordnung nach Anspruch 1, **dadurch gekennzeichnet, dass** die wenigstens eine Lagertasche (3) von wenigstens einer ring- oder rahmenförmigen Dichtanordnung (5, 7/8, 6/FL2) umgeben ist

3. Gleitlageranordnung nach Anspruch 2, **dadurch gekennzeichnet, dass** die ring- oder rahmenförmige Dichtanordnung (5) ausgebildet ist als ein Dichtelement (5), welches an der äußeren Umfangsperipherie der Gleitlageranordnung den Lagerspalt (4) zwischen den Lagerelementen (1, 2) überdeckt.

4. Gleitlageranordnung nach Anspruch 2 oder 3, **dadurch gekennzeichnet, dass** das Dichtelement (5) an der Umfangsfläche des einen Lagerelements (1) gedichtet befestigt ist und an der Umfangsfläche des anderen Lagerelements (2) lose anliegend ist, so dass das obere Lagerelement (2) in der Abstandsrichtung beider Lagerelemente (1, 2) innerhalb des umgebenden Dichtelementes (5) verschieblich ist.

5. Gleitlageranordnung nach Anspruch 4, **dadurch gekennzeichnet, dass** das Dichtelement (5) an der Umfangsfläche des einen Lagerelements (1) gedichtet befestigt ist und an der Umfangsfläche des anderen Lagerelements (2) formschlüssig anliegend ist und in der Abstandsrichtung beider Lagerelemente (1, 2) längenvariabel ausgebildet ist.

6. Gleitlageranordnung nach Anspruch 2, **dadurch gekennzeichnet, dass** die ring- oder rahmenförmige Dichtanordnung (6, 7, FL2) ausgebildet ist als wenigstens eine zum Lagerspalt offene Nut (6) in einem der Lagerelemente (1, 2), wobei die wenigstens eine Nut (6) die wenigstens eine Lagertasche umgibt und in der wenigstens einen Nut (6) ein Dichtmittel (7, FL2) angeordnet ist.

7. Gleitlageranordnung nach Anspruch 6, **dadurch gekennzeichnet, dass** das Dichtmittel als elastisches Dichtelement (7) ausgebildet ist, welches an seiner Niederdruckseite von einem in der Nut liegenden Stützring (8) umgeben ist.

8. Gleitlageranordnung nach Anspruch 7, **dadurch gekennzeichnet, dass** das Dichtmittel als ein Fluid (FL2) ausgebildet ist, welches eine höhere Viskosität aufweist, als das Fluid (FL1) in der wenigstens einen Lagertasche (3).

9. Gleitlageranordnung nach einem der vorherigen Ansprüche 6 bis 8, **dadurch gekennzeichnet, dass** bei mehreren vorgesehenen Nuten (6a, 6b) in unterschiedlichen Nuten (6a, 6b) verschiedene Dichtmittel (7, FL2) angeordnet sind.

10. Gleitlageranordnung nach Anspruch 9, **dadurch gekennzeichnet, dass** eine Nut (6a), die mit einem Fluid (FL2) als Dichtmittel gefüllt ist, von einer weiteren Nut (6b) umgeben ist, in der ein elastisches, Dichtelement (7) als Dichtmittel angeordnet ist.

11. Gleitlageranordnung nach Anspruch 9, **dadurch gekennzeichnet, dass** bei vorgesehenen mehreren Nuten (6) mit jeweils einem Fluid (FL2) als Dichtmittel, die Viskosität der Fluide (FL2) von der Hochdruckseite des Lagerspaltes (4) in Richtung zur Niederdruckseite des Lagerspaltes (4) zunimmt.

12. Gleitlageranordnung nach einem der vorherigen Ansprüche 2 bis 11, **dadurch gekennzeichnet, dass** an der Niederdruckseite vor einer Dichtanordnung (FL2) wenigstens ein Druckentlastungs-Kanal (9) angeordnet ist, der die wenigstens eine Lagertasche (3) über den Lagerspalt (4) hinweg mit einer Drucksenke verbindet.

13. Gleitlageranordnung nach Anspruch 12, **dadurch gekennzeichnet, dass** das Fluid (FL1) der wenigstens einen Lagertasche (3) zwischen einer Druckquelle, der wenigstens einen Lagertasche (3), dem Lagerspalt (4), wenigstens einem Druckentlastungskanal (9) und der Drucksenke im Kreislauf gefördert ist.

14. Gleitlageranordnung nach einem der vorherigen Ansprüche 8 bis 13, **dadurch gekennzeichnet, dass** ein Fluid (FL2) einer Dichtanordnung mit wenigstens einer der nachfolgenden Eigenschaften ausgebildet ist:
a. als Nicht-Newtonsche Flüssigkeit,
b. als Bingham'sche Flüssigkeit,
c. als Flüssigkeit mit einem in Abhängigkeit einer von außen auf das Fluid wirkenden Größe, insbesondere Magnetfeldstärke, änderbaren rheologischen Verhalten,
d. als Fluid (FL2), das mit dem Fluid (FL1) der wenigstens einen Lagertasche (3) nicht mischbar ist.

15. Gleitlageranordnung nach einem der vorherigen Ansprüche, **dadurch gekennzeichnet, dass** die Viskosität des Fluids (FL1) mit zunehmender Scherrate zunimmt.

16. Gleitlageranordnung nach einem der vorherigen Ansprüche, **dadurch gekennzeichnet, dass** die Lagertasche (3) durch mehrere über den Querschnitt der Lagertasche (3) verteilte Kanäle (10) mit Fluid (FL1) druckbeaufschlagt ist.

17. Gleitlageranordnung nach einem der vorherigen Ansprüche, **dadurch gekennzeichnet, dass** der Trennkörper (13) als ein in der Lagertasche beweglicher Kolben oder als bewegliche Membran ausgebildet ist.

## Claims

1. Hydrostatic sliding-contact bearing arrangement, comprising a first bearing element (1) and a second bearing element (2), wherein at least one recess (3) is arranged in at least one of the bearing elements (1), is open in the direction of the other bearing element (2) and forms at least one bearing pocket (3) which is filled with a pressurizable/pressurized fluid (FL1), **characterized in that** the bearing pocket (3) has a dividing body (13) which splits the bearing pocket (3) over its entire cross section into two regions, wherein a pressure-introducing fluid (FL3) is applied to one of the regions with at least one channel, and the region facing towards the opposite bearing element (2) is filled with the pressurized fluid (FL1), which has the rheological behaviour of a Bingham body.

2. Sliding-contact bearing arrangement according to Claim 1, **characterized in that** the at least one bearing pocket (3) is surrounded by at least one ring-shaped or frame-shaped sealing arrangement (5, 7/8, 6/FL2).

3. Sliding-contact bearing arrangement according to Claim 2, **characterized in that** the ring-shaped or frame-shaped sealing arrangement (5) takes the form of a sealing element (5) which, at the outer circumferential periphery of the sliding-contact bearing arrangement, covers the bearing gap (4) between the bearing elements (1, 2).

4. Sliding-contact bearing arrangement according to Claim 2 or 3, **characterized in that** the sealing element (5) is fastened in a sealed manner to the circumferential surface of the one bearing element (1) and bears loosely against the circumferential surface of the other bearing element (2), with the result that the upper bearing element (2) is displaceable in the spacing direction of the two bearing elements (1, 2) within the surrounding sealing element (5).

5. Sliding-contact bearing arrangement according to Claim 4, **characterized in that** the sealing element (5) is fastened in a sealed manner to the circumferential surface of the one bearing element (1) and bears in a form-fitting manner against the circumferential surface of the other bearing element (2), and is of length-variable design in the spacing direction of the two bearing elements (1, 2).

6. Sliding-contact bearing arrangement according to Claim 2, **characterized in that** the ring-shaped or frame-shaped sealing arrangement (6, 7, FL2) takes the form of at least one groove (6), which is open towards the bearing gap, in one of the bearing elements (1, 2) wherein the at least one groove (6) surrounds the at least one bearing pocket, and a sealing means (7, FL2) is arranged in the at least one groove (6).

7. Sliding-contact bearing arrangement according to Claim 6, **characterized in that** the sealing means takes the form of an elastic sealing element (7) which, at its low-pressure side, is surrounded by a supporting ring (8) situated in the groove.

8. Sliding-contact bearing arrangement according to Claim 7, **characterized in that** the sealing means takes the form of a fluid (FL2) which has a higher viscosity than the fluid (FL1) in the at least one bearing pocket (3).

9. Sliding-contact bearing arrangement according to one of the preceding Claims 6 to 8, **characterized in that,** when there are a plurality of grooves (6a, 6b) provided, various sealing means (7, FL2) are arranged in different grooves (6a, 6b).

10. Sliding-contact bearing arrangement according to Claim 9, **characterized in that** a groove (6a), which is filled with a fluid (FL2) as sealing means, is surrounded by a further groove (6b) in which an elastic sealing element (7) as sealing means is arranged.

11. Sliding-contact bearing arrangement according to Claim 9, **characterized in that,** when there are a plurality of grooves (6) provided, each having a fluid (FL2) as sealing means, the viscosity of the fluids (FL2) increases from the high-pressure side of the bearing gap (4) in the direction of the low-pressure side of the bearing gap (4).

12. Sliding-contact bearing arrangement according to one of the preceding Claims 2 to 11, **characterized in that,** on the low-pressure side, upstream of a sealing arrangement (FL2), there is arranged at least one pressure-relief channel (9) which connects the at least one bearing pocket (3), over the bearing gap (4), to a pressure sink.

13. Sliding-contact bearing arrangement according to Claim 12, **characterized in that** the fluid (FL1) of the at least one bearing pocket (3) is conveyed in a circulating manner between a pressure source, the at least one bearing pocket (3), the bearing gap (4), at least one pressure-relief channel (9) and the pressure sink.

14. Sliding-contact bearing arrangement according to one of the preceding Claims 8 to 13, **characterized in that** a fluid (FL2) of a sealing arrangement is designed to have at least one of the following properties:
a. as non-Newtonian liquid,
b. as Bingham liquid,
c. as a liquid having a rheological behaviour which can be changed in accordance with a variable, in particular a magnetic field strength, acting from outside on the fluid,
d. as a fluid (FL2) which cannot be mixed with the fluid (FL1) of the at least one bearing pocket (3) .

15. Sliding-contact bearing arrangement according to one of the preceding claims, **characterized in that** the viscosity of the fluid (FL1) increases with increasing shear rate.

16. Sliding-contact bearing arrangement according to one of the preceding claims, **characterized in that** the bearing pocket (3) is pressurized with fluid (FL1) through a plurality of channels (10) distributed over the cross section of the bearing pocket (3).

17. Sliding-contact bearing arrangement according to one of the preceding claims, **characterized in that** the dividing body (13) takes the form of a movable piston or of a movable membrane that can move in the bearing pocket.

## Revendications

1. Agencement de palier lisse hydrostatique comportant un premier élément de palier (1) et un deuxième élément de palier (2), au moins un évidement (3) étant agencé dans au moins un des éléments de palier (1), qui est ouvert en direction de l'autre élément de palier (2) et qui forme au moins une poche de palier (3), qui est remplie avec un fluide (FL1) pouvant être sollicité en pression/sollicité en pression, **caractérisé en ce que** la poche de palier (3) comprend un corps de séparation (13), qui divise la poche de palier (3) sur sa section transversale totale en deux zones, une des zones étant sollicitée par l'intermédiaire d'au moins un canal par un fluide apportant de la pression (FL3) et la zone orientée vers l'élément de palier opposé (2) étant remplie avec le fluide sollicité en pression (FL1), qui présente le comportement rhéologique d'un corps de Bingham.

2. Agencement de palier lisse selon la revendication 1, **caractérisé en ce que** l'au moins une poche de palier (3) est entourée par au moins un agencement d'étanchéité en forme de bague ou de cadre (5, 7/8, 6/FL2).

3. Agencement de palier lisse selon la revendication 2, **caractérisé en ce que** l'agencement d'étanchéité en forme de bague ou de cadre (5) est configuré sous la forme d'un élément d'étanchéité (5) qui recouvre la fente de palier (4) entre les éléments de palier (1, 2) au niveau de la périphérique circonférentielle extérieure de l'agencement de palier lisse.

4. Agencement de palier lisse selon la revendication 2 ou 3, **caractérisé en ce que** l'élément d'étanchéité (5) est fixé de manière étanche au niveau de la surface circonférentielle d'un élément de palier (1), et repose de manière lâche au niveau de la surface circonférentielle de l'autre élément de palier (2), de telle sorte que l'élément de palier supérieur (2) soit coulissant dans la direction de l'écart des deux éléments de palier (1, 2) à l'intérieur de l'élément d'étanchéité entourant (5).

5. Agencement de palier lisse selon la revendication 4, **caractérisé en ce que** l'élément d'étanchéité (5) est fixé de manière étanche au niveau de la surface circonférentielle d'un élément de palier (1) et repose par accouplement de forme au niveau de la surface circonférentielle de l'autre élément de palier (2) et est configuré sous forme variable en longueur dans la direction de l'écart des deux éléments de palier (1, 2) .

6. Agencement de palier lisse selon la revendication 2, **caractérisé en ce que** l'agencement d'étanchéité en forme de bague ou de cadre (6, 7, FL2) est configuré sous la forme d'au moins une rainure (6) ouverte vers la fente de palier dans un des éléments de palier (1, 2), l'au moins une rainure (6) entourant l'au moins une poche de palier et un moyen d'étanchéité (7, FL2) étant agencé dans l'au moins une rainure (6).

7. Agencement de palier lisse selon la revendication 6, **caractérisé en ce que** le moyen d'étanchéité est configuré sous la forme d'un élément d'étanchéité élastique (7), qui est entouré au niveau de son côté basse pression par une bague de soutien (8) située dans la rainure.

8. Agencement de palier lisse selon la revendication 7, **caractérisé en ce que** le moyen d'étanchéité est configuré sous la forme d'un fluide (FL2), qui présente une viscosité plus élevée que le fluide (FL1) dans l'au moins une poche de palier (3).

9. Agencement de palier lisse selon l'une quelconque des revendications 6 à 8 précédentes, **caractérisé en ce que,** lorsque plusieurs rainures (6a, 6b) sont prévues, divers moyens d'étanchéité (7, FL2) sont agencés dans différentes rainures (6a, 6b).

10. Agencement de palier lisse selon la revendication 9, **caractérisé en ce qu'**une rainure (6a), qui est remplie avec un fluide (FL2) en tant que moyen d'étanchéité, est entourée par une rainure supplémentaire (6b), dans laquelle un élément d'étanchéité élastique (7) est agencé en tant que moyen d'étanchéité.

11. Agencement de palier lisse selon la revendication 9, **caractérisé en ce que,** lorsque plusieurs rainures (6) sont prévues, chacune munies d'un fluide (FL2) en tant que moyen d'étanchéité, la viscosité des fluides (FL2) augmente depuis le côté haute pression de la fente de palier (4) en direction du côté basse pression de la fente de palier (4).

12. Agencement de palier lisse selon l'une quelconque des revendications 2 à 11 précédentes, **caractérisé en ce que,** sur le côté basse pression, avant un agencement d'étanchéité (FL2), au moins un canal de déchargement de pression (9) est agencé, qui relie l'au moins une poche de palier (3) par l'intermédiaire de la fente de palier (4) avec un puits de pression.

13. Agencement de palier lisse selon la revendication 12, **caractérisé en ce que** le fluide (FL1) de l'au moins une poche de palier (3) est transporté en circuit entre une source de pression, l'au moins une poche de palier (3), la fente de palier (4), au moins un canal de déchargement de pression (9) et le puits de pression.

14. Agencement de palier lisse selon l'une quelconque des revendications 8 à 13 précédentes, **caractérisé en ce qu'**un fluide (FL2) d'un agencement d'étanchéité est configuré avec au moins une des propriétés suivantes :
a. en tant que liquide non newtonien,
b. en tant que liquide de Bingham ;
c. en tant que liquide ayant un comportement rhéologique modifiable en fonction d'une grandeur agissant depuis l'extérieur sur le fluide, notamment une puissance de champ magnétique,
d. en tant que fluide (FL2), qui n'est pas miscible avec le fluide (FL1) de l'au moins une poche de palier (3) .

15. Agencement de palier lisse selon l'une quelconque des revendications précédentes, **caractérisé en ce que** la viscosité du fluide (FL1) augmente avec un taux de cisaillement croissant.

16. Agencement de palier lisse selon l'une quelconque des revendications précédentes, **caractérisé en ce que** la poche de palier (3) est sollicitée en pression avec le fluide (FL1) par l'intermédiaire de plusieurs canaux (10) répartis sur la section transversale de la poche de palier (3).

17. Agencement de palier lisse selon l'une quelconque des revendications précédentes, **caractérisé en ce que** le corps de séparation (13) est configuré sous la forme d'un piston mobile dans la poche de palier ou sous la forme d'une membrane mobile.
